(19) **Europäisches Patentamt / European Patent Office / Office européen des brevets**

(11) **EP 3 184 981 A1**

(12) # EUROPEAN PATENT APPLICATION
published in accordance with Art. 153(4) EPC

(43) Date of publication:
**28.06.2017 Bulletin 2017/26**

(21) Application number: **15834428.3**

(22) Date of filing: **17.08.2015**

(51) Int Cl.:
***G01K 7/36*** (2006.01)

(86) International application number:
**PCT/ES2015/070626**

(87) International publication number:
**WO 2016/026996 (25.02.2016 Gazette 2016/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **21.08.2014 ES 201431244**

(71) Applicant: **Universidade de Santiago de Compostela**
**15782 Santiago de Compostela (ES)**

(72) Inventors:
- **RIVADULLA FERNÁNDEZ, José Francisco**
  **15782 Santiago de Compostela (La Coruña) (ES)**
- **CONG BUI, Tinh**
  **15782 Santiago de Compostela (La Coruña) (ES)**

(74) Representative: **Balder IP Law, S.L.**
**Paseo de la Castellana 93**
**5a planta**
**28046 Madrid (ES)**

(54) **TEMPERATURE-MEASURING DEVICE, METHOD FOR MANUFACTURING THE DEVICE, AND SYSTEM FOR MEASURING THE POINT OF IMPACT INCORPORATED IN THE DEVICE**

(57)     The invention relates to a temperature-measuring device, to a method for manufacturing the device, and system for measuring point of impact incorporated in the device. According to one aspect, the invention relates to a temperature-measuring device including a sheet of thin film made of magnetic-metallic material such that, in use and the presence of an applied magnetic field, a change of temperature in one area of the sheet generates an electric voltage in the area, the generated electric voltage being readable by an electric voltage reader corresponding to the area. According to another aspect, the invention relates to a method for manufacturing the device. According to yet another aspect, the invention refers to a system, incorporated in the device, to measure point of impact, radiation, or particles.

Figure 1

EP 3 184 981 A1

## Description

### TECHNICAL FIELD OF THE INVENTION

The present invention relates to temperature measuring devices and to process of manufacturing temperature measuring devices.

### STATE OF THE ART

Numerous devices that allow temperature measurement are known in the state of the art, which are based on different physical phenomena. The vast majority of these systems aim to measure the ambient temperature.

A temperature and humidity measurement system is shown in the US patent application US2014/105242. This system consists of nano-particles (carbon nanotubes) and a layer of non-conductive polymer.

An integrated circuit containing a conductive film, a plurality of electrodes and a polymer film is disclosed in US Pat. No. 4,603,372. This system is used to measure the temperature and humidity of the environment.

All of these temperature measuring devices have a complex configuration (electrodes, nano-particles, conductive and / or polymeric films, etc.) and also have insufficient temperature resolution as well as low stability and resolution.

On the other hand, there are also known systems for determining the position of the point of impact of a particle and / or radiation.

Thus, US Pat. No. US4898471 discloses a particle detection system on surfaces with a particular pattern. This system is based on the application of a light beam and on the measurement of the signal reflected by the surface.

US patent application US2012/293192 discloses a photon and particle detection system based on the detection of the charge generated by the photon or particle when it strikes the system.

[Mayer et. to the. Nuclear Science Symposium, 1996. Conference Record., 1996 IEEE] discloses a system with sub-millimeter resolution for the measurement of radiation, in which its position is also determined, this system being based on the use of CdZnTe detectors.

Finally, [Lameres et.al, IEEE SENSORS 2010 Conference] discloses a radiation detection system which also allows to indicate the position in which it impacts, based on the accumulation of charge produced by the incident radiation in the system.

In general, such detection systems and others known in the state of the art require complex circuitry, which makes them costly and with high susceptibility to failures and the resolution they offer to the extent of being about tenths of a degree in the best of all.

## DESCRIPTION OF THE INVENTION

Therefore, there is a need for new temperature measuring devices and methods of manufacturing such temperature measuring devices which solve at least some of the above-mentioned problems. It is an object of the present invention to satisfy said need

According to a first aspect, this objective is achieved by providing a temperature measuring device comprising a thin film sheet of magnetic-metallic material, said sheet being formed by a plurality of regions and comprising each of said region electric voltage reading means; so that, in operation and in the presence of an applied magnetic field, a variation of the temperature in one of the regions generates an electric voltage in the region (that is, causes a variation in the electric potential in the region), being readable said electric voltage through the electric voltage reading means of the corresponding to the zone.

In this way, a simple and efficient temperature measuring device (ie, without requiring complex circuitry) is obtained. Moreover, it is capable of detecting small temperature variations at a very localised point, as the thin film sheet is divided into regions, each of which comprises reading means for or obtaining electrical voltage measurements when a temperature variation occurs in said region.

On the other hand, no special deposition of the film is required (it is adapted to the surface where the temperature is to be measured) and any type of ferromagnetic and metallic material is can be used.

Moreover, it is a simple device, which can be manufactured using conventional techniques and at a reduced cost. Another advantage of the device object of the present invention is the spatial resolution that can be obtained for temperature measurement.

To obtain the regions in the sheet the sheet must be divided by a lithography process, a mask, etc., as will be described below.

Basically, the technical description of the operation of the device is based on the following premises.

The fundamental coefficients of charge and heat transfer in the electronic conductors can be described by a pair of kinetic equations in which the electric and thermal flows are linearly related to their corresponding conjugate forces: i.e., the electric field E and the thermal gradient $\nabla T$. Due to the fact that the electric current J and the heat U can interact, a transport matrix in which the elements outside the diagonal are related through the Onsager-Kelvin reciprocal relations is defined. This is the basis of the thermoelectric, which provides the relationship between U and J, through the Peltier coefficient.

The different state density and Fermi velocities for electrons with up / down magnetic spin moment (the term "spin" being understood as an intrinsic moment of rotation of an elementary particle or of an atomic nucleus) characteristic of the magnetic-metallic materials population produces different conductivities for the opposite spin directions. When the spin relaxation time is greater than the relaxation time of the moment, the spin dependent part must be taken into account in the transport equations. Therefore, there is a Seebeck and Peltier coefficients dependent on the spin, based on the Onsager reciprocity. On the other hand, in magnetic conductors, the spin-orbit interaction introduces an anisotropic thermoelectric voltage, as a function of the angle $\Theta$ between the temperature gradient and the magnetization of the material M. These are the thermal counterparts (Onsager reciprocals) of anisotropic magnetoresistance (AMR) and the planar Hall effect (PHE). In the planar Nernst effect (PNE), the transverse voltage is related to the magnetization M and the angle $\Theta$ by:

$$S_{xy} = V_{xy} / \nabla T_x \propto |M|^2 \sin \Theta \cos \Theta$$

wherein M and vT have components in the xy plane. However, a $\nabla Tz \neq 0$ in a magnetic-metallic material will produce a potential difference $V_{xy}$ due to the Nerst anomalous effect (ANE):

$$V_{xy} = -S_{xx} \xi \left( \hat{m} \times \nabla T_z \right)$$

wherein $S_{xx}$ is the linear Seebeck coefficient, m is the unit vector of magnetization and $\xi$ is the Nerst factor. Thus, a planar Nerst effect and an anomalous Nerst effect are produced on thin sheets of magnetic-metallic materials in the presence of magnetic fields.

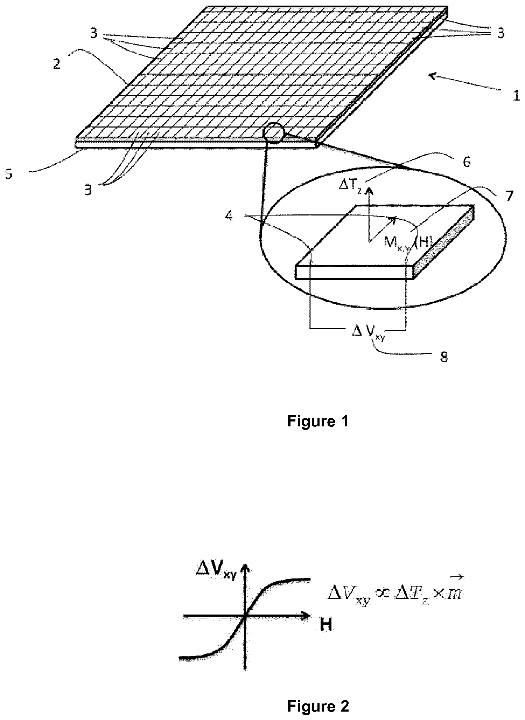

As can be seen in the ANE equation, a system with a temperature difference proportional to its magnetization produces an electrical voltage perpendicular to both (see Figure 2).

Therefore, the measurement of the electrical voltage in the region (i.e., the potential variation therein due to the temperature variation occurring therein) also makes it possible to determine the position (more precisely, the region of the thin film sheet) in which the temperature variation has occurred.

Since the Seebeck coefficient is in the order of microvolts per kelvin in ferromagnetic metals, and the Nernst coefficient typically varies between 0.1 and 0.5, temperature variations of the order of micro Kelvin can be solved, giving rise to tensions on the order of one microvolt fraction, which can be read with the corresponding reading means.

At this point it is important to note that the applied magnetic field may be parallel to the plane of the thin film or at least as parallel as possible to the orientation of the device and may have a value greater than 1900 A / m.

According to some examples, the thin film sheet comprised in the device may have a thickness in the range of 10 nm to 100 nm.

On the other hand, the magnetic-metallic material of the thin film sheet may be selected from:

- a semi-metallic and magnetic material;;
- a perovskita-oxide material;
- a permalloy type alloy;
- a Ni-Cr alloy;
- a metallic ferromagnetic element at room temperature.

The semi-metallic and magnetic material can be selected from $La_{2/3}Sr_{1/3}MnO_3$, $La_{2/3}Ca_{1/3}MnO_3$, $Fe_3O_4$, while the ferromagnetic and metallic element can be selected from Fe, Ni.

According to other examples, the reading means for reading the electric voltage may comprise, in each region, depositions of metallic material (for example metal contacts). These depositions allow the measurement of the electrical voltage generated in the sheet by a temperature variation produced therein (more precisely, in the region of the sheet in which this temperature variation occurs, which produces an electric voltage generation), i.e. a local variation in temperature in the thin film sheet generates a voltage which is measured in these depositions (they may have the shape, for example, of metal contacts). The depositions may form a regular array on the thin film sheet.

Thus, these reading means of the electric voltage may have, for each zone, a configuration of, for example, a plurality of metallic contacts (at least two), at which a conductive wire (for example make of copper) can be connected, which through their other ends can be connected to, for example, a nanovoltimeter or similar device to determine the variation of electric voltage in the region.

According to some examples, the depositions may be of a material selected from platinum, gold, palladium, silver, copper, aluminum. In addition, depositions may be punctual depositions and the separation between depositions of the same region may be in the range of microns to millimeters.

According to other examples, the temperature measuring device may further comprise a substrate on which the thin film sheet of magnetic-metallic material is located.

According to further examples, there is also provided a system for measuring the point of impact of a particle which may comprise a temperature measuring device as described above; and a sheet of kinetic energy absorbing material, configured to transform the kinetic energy into a temperature variation (i.e., this sheet of kinetic energy absorbing material produces a local temperature variation in the temperature measuring device).

Basically, when a particle impact on the sheet of kinetic energy absorbing material, it transforms this energy into a temperature variation, which generates an electric voltage in the corresponding region of the thin film sheet which is in contact with the point of the sheet of kinetic energy absorbing material in which the particle has impacted through the corresponding electrical voltage reading means (those present in the region) it is possible to read or obtain the voltage value produced by the impact of the particle. In addition, it is also possible to determine the point of impact of the particle on the thin film sheet (i.e. the region of the thin film sheet which has received the impact of the particle), since that area provides a non zero voltage value, while the remaining regions of the thin film sheet have a zero voltage value. Therefore, it is possible to obtain a system that allows to determine in a simple and cheap way the position in which a particle hits or impacts.

According to further examples, the present invention provides a method of measuring the impact point of a radiation beam comprising a temperature measuring device as described above; and a sheet of radiation absorbing material, configured to transform the energy of the radiation beam, into heat (i.e., this sheet of radiation absorbing material causes a local temperature variation in the temperature measurement device).

In the same way of the above described system, when a radiation beam impacts on the radiation absorbing sheet material, it transforms this energy into a temperature variation (e.g. in heat), which generates an electric voltage in the corresponding region of the thin film sheet which is in contact with the point of the sheet of radiation absorbing sheet material in which the radiation beam has impacted. Through the electrical voltage reading means of the corresponding region (those present in the region) it is possible to determine the voltage value produced due to the beam impact. Moreover, it is also possible to determine the point of impact of the beam on the sheet (i.e., the region of the sheet that has received the beam impact), since that region provides a voltage value different from zero, while the rest of zones of the sheet have a zero voltage value. Therefore, it is possible to obtain a system which allows a simple and inexpensive determination of the position in which a beam of radiation impacts.

At this point it is important to note that the radiation beam can be generated, for example, by a laser.

According to another aspect of the invention, it is provided a process for manufacturing a temperature measuring device comprising:

- providing an aqueous solution comprising precursor cations and a polymer;
- depositing by a deposition process the aqueous solution on a substrate;
- subjecting the substrate to a heating process; and
- generating a plurality of metal depositions (4) in the substrate.

According to some examples, the deposition process may be a physical vacuum deposition process, which may be selected from

- spin coating;
- sputtering;
- atomic layer deposition;
- pulsed laser (PLD).

In addition, the step of generating a plurality of metal depositions in the substrate comprises:

- depositing metal on the substrate;
- applying a mask to the substrate; and
- applying a lithography process to obtain a plurality of punctual metallic depositions on the substrate

Metal point depositions may be metal contacts, as discussed above.

The precursor cations which are comprised in the aqueous solution may be selected from La, Sr, Ca, Mn, Fe, Cr, Ni; and its concentration may be in the millimolar range.

On the other hand, the polymer may be selected from water-soluble PEI (polyethyleneimine) or chitosan polymers; and its concentration may be in the millimolar range.

According to some examples, the substrate on which the aqueous solution is deposited may be of a magnetic-metallic material, which may be selected from:

- a semimetallic and magnetic material;
- a perovskita-oxide material;
- a permalloy type alloy;
- a Ni-Cr alloy;
- a metallic ferromagnetic element at room temperature

The magnetic semi-metallic material may be selected from $La_{2/3}Sr_{1/3}MnO_3$, $La_{2/3}Ca_{1/3}MnO_3$, $Fe_3O_4$, whereas the ferromagnetic metal element may be selected from Fe, Ni.

According to further examples, the step of subjecting the substrate to a heating process may comprise subjecting the substrate to a heating process in which the temperature is set in the range of 600 °C to 900 °C.

According to still further examples, the depositions may be of a material selected from platinum, gold, palladium, silver, copper, aluminum.

Other advantages and features of embodiments of the invention will become apparent to the person skilled in the art from the description, or may be learned from the practice of the invention.

## BRIEF DESCRIPTION OF THE FIGURES

Particular embodiments of the present invention are described by way of non-limiting example, with reference to the accompanying drawings, in which

Figure 1 shows examples of temperature measuring devices, according to the present description.

Figure 2 shows a graphical representation of the variation of the voltage difference $\nabla V_{xy}$ generated by a thermal gradient as a function of the magnitude of the magnetic field H.

Figure 3 shows a graphical representation of the variation of the voltage V generated by a temperature gradient by varying the applied magnetic field H.

## DETAILED DESCRIPTION OF THE INVENTION

As can be seen in Figure 1, according to some examples, a temperature measuring device (1) may comprise a thin film sheet (2) of magnetic-metallic material. This thin film sheet (2) may be formed of a plurality of regions (3), comprising each of these regions electric voltage reading means (4) in the region. Thus, when the device (1) is in operation and in the presence of an applied magnetic field, a variation of the temperature in one of the region (3) generates an electrical voltage (that is, it causes a variation in the electric potential in the area), being this electric voltage readable through the electric voltage reading means of the corresponding region.

The magnetic-metallic material of the thin film sheet (2) may be selected from:

- a semimetallic and magnetic material;
- a perovskita-oxide material;
- a permalloy type alloy;
- a Ni-Cr alloy;
- a metallic ferromagnetic element at room temperature.

The magnetic semi-metallic material may be selected from $La_{2/3}Sr_{1/3}MnO_3$, $La_{2/3}Ca_{1/3}MnO_3$, $Fe_3O_4$, whereas the ferromagnetic metal element may be selected from Fe, Ni.

On the other hand, the thickness of the sheet (2) may be in the range of 10 nm to 100 nm.

According to some examples, the applied magnetic field may be parallel to the orientation of the device and may have a value greater than 1900 A/m.

The electric voltage reading means (4) of the corresponding region may have the configuration of a plurality of electrical contacts (for example two), each of which may be connected to the end of a conductive (e.g. copper) wire. The other end of the wires may be connected to a nanovoltimeter or the like (not shown) in order to measure the voltage variation in the region.

Basically, Figure 1 further shows the operation of the temperature measuring device (1) when forming part of a system for determining the impact point of a radiation beam or a particle, in which it is introduced a sheet (5) which transforms the kinetic energy of a particle in a temperature variation (in this case it may be a sheet of kinetic energy absorbing material) or the energy of radiation beam in heat (in this case it may be a sheet of radiation absorbing material), producing a gradient or a temperature variation (6). This temperature gradient (6) in the presence of a magnetic field (7) generates a voltage (8) which is measured and which allows to determine the point of impact of the radiation or the particle.

In some examples, a 35 nm thick layer of ferromagnetic and metallic oxide $La_{2/3}Sr_{1/3}MnO_3$ (LSMO) is deposited with side dimensions of 5 mm x 5 mm. This layer is deposited by pulsed laser deposition (PLD) on a 0.5 mm thick monocrystalline $SrTiO_3$ (STO) substrate.

At one end of the LSMO film, a Pt line 4 mm long, 100 microns wide and 10 nm thick is deposited by evaporation. To determine or measure the voltage generated in response to the generation of a thermal gradient, the ends of the platinum line are connected by copper wires to a nanovoltimeter to determine the voltage variation, as described above.

The STO with the LSMO layer at its top is placed on a copper block with a ceramic electrical resistance inside it, which is used to vary the temperature and thus create a thermal gradient between the bottom and top of the LSMO film. In addition, the system is subjected to a base pressure of 10-5 Torr, to avoid uncontrolled thermal gradients that can cause parasitic gradients whic would contaminate the measurement.

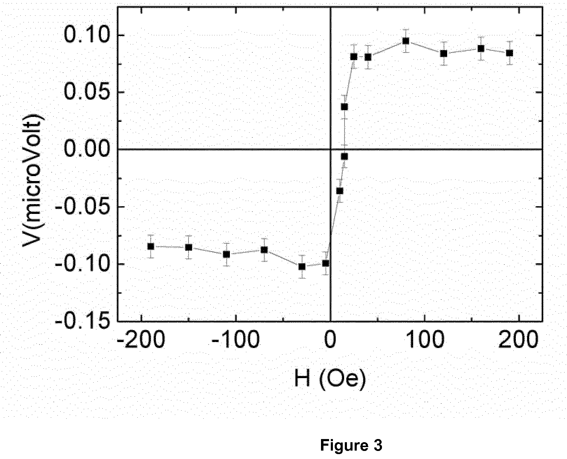

A current is applied to the resistor in the copper block in order to increase the temperature of the base and create a thermal gradient through the LSMO film. When very small power is dissipatedf (a few mW), a GaAs diode stuck to the copper base is not able to detect any variation of the temperature. However, as can be seen in Figure 3, performing a magnetic field scanning a transverse voltage between the ends of the platinum strip, due to the Nernst Anomalous Effect (ANE), appears. This voltage changes sign when changing the magnetic field, as expected according to the ANE equation. Once the saturation magnetization of the LSMO system is reached, the voltage is stable with the field. In addition, the voltage increases linearly with the thermal gradient through the LSMO layer. For the example shown, the estimated temperature variation is 2 micro Kelvin between the top and bottom of the 35 nm LSMO layer.

Although only some particular embodiments and examples have been described here, one skilled in the art will appreciate that other alternative embodiments and / or uses are possible, as well as obvious modifications and equivalent elements. In addition, the present disclosure encompasses all possible combinations of the particular embodiments which have been described. Numerical signs relating to the drawings and placed in parentheses in a claim are only intended to increase the understanding of the claim, and should not be construed as limiting the scope of the protection of the claim. The scope of the present disclosure should not be limited to particular embodiments, but should be determined only by an appropriate reading of the appended claims.

## Claims

1. A temperature measure device (1) **characterized in that** comprises:

   • a magneto-metallic thin film sheet (2), being conformed such
   • sheet by a plurality of regions (3) and comprising each of these regions voltage reading means (4) within the regions, comprising such means metallic material depositions;

   so that, in operation and in the presence of an applied magnetic field (7), a temperature variation (6) in one of the regions generates a voltage (8) in such region, being readable such voltage through the voltage reading means (4) corresponding to the region.

2. The device, according to claim 1, **characterised in that** the sheet (2) has a thickness comprised in the range 10 nm to 100 nm.

3. The device, according to any of the claims 1 or 2, chrazterised in that the magneto-metallic material of the sheet (2) is selected from

   • a semi-metallic and magnetic material;;
   • a perovskita-oxide material;
   • a permalloy type alloy;
   • a Ni-Cr alloy;
   • a metallic ferromagnetic element at room temperature.

4. El dispositivo, according to claim 3, **characterised in** thar the semi-metallic and magnetic material is selected from $La_{2/3}Sr_{1/3}MnO_3$, $La_{2/3}Ca_{1/3}MnO_3$, $Fe_3O_4$.

5. The device, accoding to claim 3, **characterised in that** the metallic ferromagnetic element is selected from Fe, Ni.

6. The device, according to claim 1, **characterised in that** the depositions (4) are make of a material selected from platinum, gold, palladium, silver, cupper, aluminum.

7. The device, accoding to any of the claims 1 or 6, **characterised in that** the depositions (4) are punctual depositions.

8. The device, according to any of the claims 6 and 7, **characterised in that** the separation between depositions of the same region is in the range from microns to milimeters.

9. The device, according to any of the claims 1 to 8, **characterised in that** also comprises a substrate on which the magneto-metallic thin film sheet (2) is settled.

10. A system for measuring the impact point of a particle **characterised in that** comprises:

    • a temperature measuring device (1) according to any of the claims 1 to 9; and
    • a sheet (5) make of a kinetic energy absorbing material, configured to transform such kinetic energy in a temperature variation.

11. A system for measuring the impact point of a radiation beam **characterised in that** comprises:

    • a temperature measuring device (1) according to any of the claims 1 to 9; and
    • a sheet (5) make of a radiation absorbing material, configured to transform such beam energy in heat.

12. A process for manufacturing a temperature measuring device (1) **characterised in that** comprises:

    • providing an aqueous solution comprising precursor cations and a polymer;
    • depositing by a deposition process the aqueous solution on a substrate;
    • subjecting the substrate to a heating process; and
    • generating a plurality of metal depositions (4) in the substrate.

13. The process, according to claim 12, **characterized in that** the deposition process is a physical vacuum deposition process.

14. The process, accoding to claim 13, **characterised in that** the physical vacuum deposition process is selected from:

    • *spin coating;*
    • *sputtering;*
    • *atomic layer deposition;*
    • pulsed laser (PLD).

15. The process, according to any of the claim 12 to 14, **characterised in** thar the generation of a plurality of metallic depositions (4) in the substrate comprises:

    ◦ depositing metal on the substrate;
    ◦ applying a mask to the substrate; and
    ◦ applying a lithography process to obtain a plurality of punctual metallic depositions on the substrate

16. The process, according to any of the claims 12 to 15, **characterised in that** the precursor cations are selected from La, Sr, Ca, Mn, Fe, Cr, Ni.

17. The process, according to any of the claims 12 to 16, **characterised in that** the polymer is selected from PEI water soluble polymer or chitosan.

18. The process, according to any of the claims 12 to 17, **characterised in that** the cation concentration is in the milimolar range.

19. The process, according to any of the claims 12 to 18, **characterised in that** the polymer concentration is in the milimolar range

20. The process, accordig to any of the claims 12 to 19, chracterised in that the substrate is make of magneto-metallic material.

21. The process, accordint to claim 20, **characterised in** the the magneto-metallic material is selected from:

    • a semimetallic and magnetic material;
    • a perovskita-oxide material;
    • a permalloy type alloy;
    • a Ni-Cr alloy;
    • a metallic ferromagnetic element at room temperature

22. The process, according to claim 21, **characterised in** thar the semimetallic and magnetic material is selected from $La_{2/3}Sr_{1/3}MnO_3$, $La_{2/3}Ca_{1/3}MnO_3$, $Fe_3O_4$.

23. The process, accoding to claim 21, **characterised in that** the metallic ferromagnetic element is selected from Fe, Ni.

24. The process, accounding to any of the claims 12 to 23, **characterised in that** subjecting the substrate to a heating process comprises subjecting the substrate to a heating process in which the temperature is set in the range of 600 ° C to 900 ° C.

25. The process, according to any of the claims 12 to 23, **characterised in** thar the depositions (4) are make of a material selected from platinum, gold, palladium, silver, cupper, aluminum.

**Figure 1**

$$\Delta V_{xy} \propto \Delta T_z \times \vec{m}$$

**Figure 2**

Figure 3

# INTERNATIONAL SEARCH REPORT

| International application No. |
| --- |
| PCT/ES2015/070626 |

**A. CLASSIFICATION OF SUBJECT MATTER**

*G01K7/36* (2006.01)

According to International Patent Classification (IPC) or to both national classification and IPC

**B. FIELDS SEARCHED**

Minimum documentation searched (classification system followed by classification symbols)
G01K

Documentation searched other than minimum documentation to the extent that such documents are included in the fields searched

Electronic data base consulted during the international search (name of data base and, where practicable, search terms used)

EPODOC, INVENES, WPI, Bases de patentes de texto completo, bases de literatura no patente.

**C. DOCUMENTS CONSIDERED TO BE RELEVANT**

| Category* | Citation of document, with indication, where appropriate, of the relevant passages | Relevant to claim No. |
| --- | --- | --- |
| A | 2012, J.M. Vila-Fungueiriño et al. "Synthesis and magneticproperties of manganite thin films on Si by polymerassisted (PAD) and pulsed laser deposition (PLD)".Mater. Res. Soc. Symp. Proc. Vol. 1449. 2012 © MaterialsResearch Society. DOI: 10.1557/opl.2012.1040 | 1-25 |
| A | 21/01/2014, J.M. Vila-Fungueiriño et al. "InterfaceMagnetic Coupling in Epitaxial Bilayers of La0.92MnO3/LaCoO3Prepared by Polymer-Assisted Deposition". Chem.Mater., 2014, 26 (3), pp 1480–1484. DOI: 10.1021/cm403868y.Publication Date (Web): January 21, 2014. Copyright© 2014 American Chemical Society. | 1-25 |
| A | WO 2012176064 A1 (COUNCIL SCIENT IND RES ET AL.) 27/12/2012, pages 1 - 13; figures 1 - 6. | 1-25 |

☒ Further documents are listed in the continuation of Box C.        ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 27/11/2015 | **(01/12/2015)** |
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>B. Tejedor Miralles<br><br>Telephone No. 91 3496879 |

Form PCT/ISA/210 (second sheet) (January 2015)

## INTERNATIONAL SEARCH REPORT

| International application No. |
| --- |
| PCT/ES2015/070626 |

**C (continuation).** DOCUMENTS CONSIDERED TO BE RELEVANT

| Category * | Citation of documents, with indication, where appropriate, of the relevant passages | Relevant to claim No. |
| --- | --- | --- |
| A | US 5792569 A (SUN JONATHAN ZANHONG   ET AL.) 11/08/1998, column 1, line 13 - column 7, line 40; figures 1 - 9. | 1-25 |
| A | US 4898471 A (VAUGHT JOHN L   ET AL.) 06/02/1990, column 1, line 15 - column 9, line 10; figure 1. | 1-25 |
| A | US 4603372 A (ABADIE GABRIEL   ET AL.) 29/07/1986, column 1, line 15 - column 5, line 44; figures 1 - 4. | 1-25 |

Form PCT/ISA/210 (continuation of second sheet) (January 2015)

**INTERNATIONAL SEARCH REPORT**

Information on patent family members

International application No.

PCT/ES2015/070626

| Patent document cited in the search report | Publication date | Patent family member(s) | Publication date |
|---|---|---|---|
| WO2012176064 A1 | 27.12.2012 | JP2014525140 A<br>US2014287534 A1<br>KR20140042867 A | 25.09.2014<br>25.09.2014<br>07.04.2014 |
| US5792569 A | 11.08.1998 | KR100245066B B1<br>JPH1012945 A<br>JP3344691B B2 | 15.02.2000<br>16.01.1998<br>11.11.2002 |
| US4898471 A | 06.02.1990 | NONE | |
| US4603372 A | 29.07.1986 | NONE | |

Form PCT/ISA/210 (patent family annex) (January 2015)

**EP 3 184 981 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014105242 A
- US 4603372 A
- US 4898471 A
- US 2012293192 A

**Non-patent literature cited in the description**

- Conference Record. **MAYER.** Nuclear Science Symposium. IEEE, 1996
- **LAMERES.** *IEEE SENSORS 2010 Conference,* 2010